# EUROPEAN PATENT SPECIFICATION

(11) **EP 1 144 952 B1**
(45) Date of publication and mention of the grant of the patent: **12.01.2005**
(21) Application number: 99969982.0
(22) Date of filing: 12.11.1999
(51) Int. Cl.: G01C 19/72

(54) **FIBER OPTIC GYROSCOPE**
FASEROPTISCHER KREISEL
GYROSCOPE A FIBRE OPTIQUE

(30) Priority: 30.12.1998 US 222898
(43) Date of publication of application: 17.10.2001
(73) Proprietor: HONEYWELL INC., Minneapolis Minnesota 55408 (US)
(72) Inventor: ANG, Dick, Glendale, AZ 85308 (US); SPICER, Timothy, L., Phoenix, AZ 85022 (US)
(74) Representative: Haley, Stephen
(86) International application number: PCT/US1999/026933
(87) International publication number: WO 2000/040925

(56) References cited:
- EP-A- 0 848 464
- FR-A- 2 736 732
- US-A- 5 684 590

## Description

### FIELD OF THE INVENTION

This invention relates generally to fiber optic gyroscopes, and more particularly, to a method and apparatus for reducing wavelength ripple in light emitted from a light source in a fiber optic gyroscope.

### BACKGROUND OF THE INVENTION

### PROBLEM

It is a problem in fiber optic gyroscope technology to provide a light source which is sufficiendy noise-free so as to enable a fiber optic gyro to sense extremely small rotation rates, with minimal spurious output due to system noise. One type of noise which is impairs gyroscope performance over a temperature range is wavelength ripple. Wavelength ripple is a periodic variation in the wavelength of a light source output as a function of temperature. In a fiber optic gyroscope, wavelength ripple over a temperature range impairs the scale factor accuracy of the fiber optic gyroscope over temperature, i.e., the relationship between the gyro input rotation rate and the output pulse rate becomes non-linear over the temperature range. It has been observed that the light emitted from certain fiber optic gyroscope light sources exhibits wavelength ripple, but the cause of the wavelength ripple, and means of suppressing it, were largely heretofore unknown. European Patent Application EP0848464 sets forth one attempt, in which a spectral filter is used to improve wavelength stability.

### SOLUTION

The present invention overcomes the foregoing problems and achieves an advance in the art by providing a method which reduces wavelength ripple in a fiber optic gyroscope by suppressing as well as reducing the effects of, whispering gallery modes generated by the gyroscope light source.

Whispering gallery modes are caused by the transmission of light through a curved section of optical fiber. More specifically, a narrow-radius bend in the optical fiber allows some of the light traveling through the fiber core to propagate into the optical fiber cladding, i.e., some of the light leaks from the core into the optical fiber buffet, forming a secondary light path. At some subsequent point along the optical fiber, this secondary light is re-coupled back into the fiber core, where it is recombined with the primary light traveling through the core, creating whispering gallery modes in the optical fiber core. The interaction of the secondary light with the primary light in the core generates two-beam or multiple-beam interference which causes intensity modulation of the light as a function of temperature.

Wavelength conversion of light in the fiber optic gyroscope light source creates light having a bimodal spectrum; i.e., having spectral peaks at two different wavelengths. When two temperature-caused intensity modulated light beams having different wavelengths are transmitted through an optical fiber which is subjected to a change in temperature, the light spectrum thus created has a resulting mean wavelength which exhibits a temperature-relative periodicity. Hence, intensity modulation of the light due to whispering gallery modes, coupled with the bimodal spectra generated by the light source, causes the light generated by the light source to exhibit wavelength ripple.

The present method functions to increase the radius of bends in existing curved sections of optical fiber used in the light source for a fiber optic gyroscope. This increase in bend radius effectively reduces the amount of core-to-clad-to-core reflected light, which in turn reduces the extent to which whispering gallery modes are generated, thereby reducing a source of wavelength ripple.

Reduction of wavelength ripple is also accomplished in the present invention by using a band rejection filter to attenuate one of the bimodal spectral components generated by the gyroscope light source.

### BRIEF DESCRIPTION OF THE DRAWING

The invention may be better understood from a reading of the following description thereof taken in conjunction with the drawing in which:
FIG. 1 is a diagram of a fiber optic light source in accordance with the present invention;
FIG. 2 is cut-away view of a fiber optic gyroscope light source, showing a wavelength division multiplexer with optical fiber bends at the input and output thereof;
FIG. 3 is an illustration showing the creation of whispering gallery modes; and
FIG. 4 depicts a typical waveform of the light generated by the fiber optic light source after having been filtered and spectrum-shifted.

### DETAILED DESCRIPTION

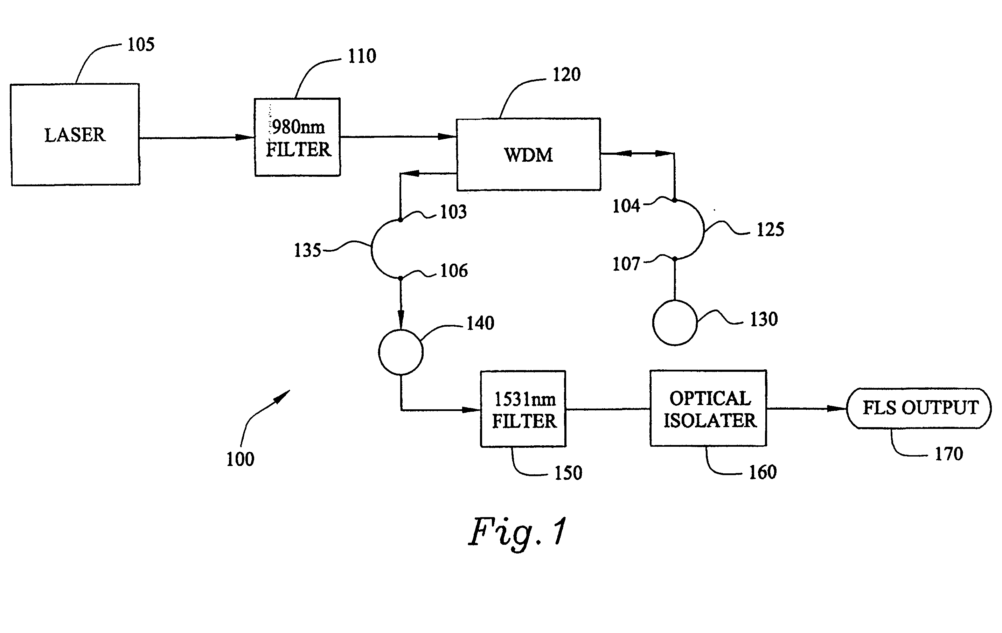

Figure 1 is a diagram of fiber optic light source 100, in accordance with one exemplary embodiment of the present invention, as used in a fiber optic gyroscope. As shown in Figure 1, laser 105 is a solid state (semiconductor) laser which generates light having a wavelength of 980 nm, in the near-infrared region. In operation, light emitted by laser 105 is passed through filter 110, which is a fiber Bragg grating used for stabilizing the wavelength of the light at 980 nm. The filtered light is then received by wavelength division multiplexer 120, which transmits the 980 nm light via semi-circular bend 125 into a length of erbium doped fiber 130, which converts (spectrum-shifts) the 980 nm light into light having a mean wavelength of approximately 1550 nm. This spectrum-shifted 1550 nm light, however, has a bimodal spectrum, with peaks 402 and 401 located at approximately 1531 nm and 1560 nm, respectively.

The 1531/ 1560 nm light then passes back (in the opposite direction) through wavelength division multiplexer 120, which redirects the light through semi-circular bend 135 into a length of erbium doped fiber 140 which is a filter used for spectrum shaping. Filter 140 converts a substantial amount of the 1531 nm light to the 1560 nm wavelength, but a vestigial amount of 1531 nm light is still present in the output of filter 140.

A band reject filter 150, which is preferably a fiber Bragg grating, is optionally employed concurrently with the above method to further attenuate the 1531 nm component of the light which is output from filter 140. The light output from band reject filter 150 is then transmitted through optical isolator 160 to produce fiber optic light source output 170. Attenuation of the 1531 nm spectral component 402 further reduces the amount of wavelength ripple present in the output 170 of fiber optic light source 100. It should be noted that the present method and apparatus functions to significantly reduce wavelength ripple in a fiber optic gyroscope, without the inclusion of band reject filter 150.

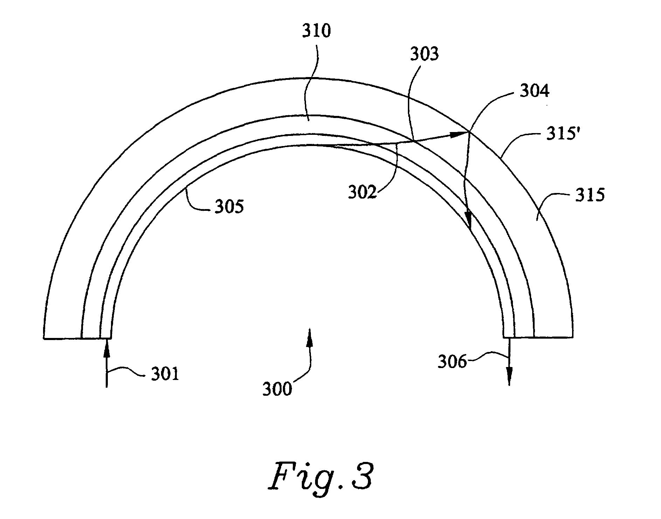

Figure 3 is an illustration of a section of optical fiber showing the creation of whispering gallery modes. As shown in Figure 3, whispering gallery modes are caused by the transmission of light through a curved section of optical fiber 300 in a fiber optic gyroscope. As the radius of a curve, or bend, in a section of optical fiber is decreased, there is a corresponding increase in the amount of light that is reflected from the curved section of fiber cladding back into the fiber core. More specifically, the bend in the optical fiber allows some of the light 301 traveling through the fiber core 305 to propagate into the fiber buffer 310, at 302, forming a secondary light path. This secondary light then leaks from buffer 310 into the cladding 315 at point 303, where at some subsequent point 304 along the optical fiber, this light is reflected from the outside wall 315' of cladding 315 back into the fiber core 305, where it is recombined with the primary light traveling through the core. The recombining in the fiber core of this secondary light with the primary light in the core generates two-beam or multiple beam interference which causes intensity modulation of light beam 306 as a function of temperature.

Light having a single narrow-line spectrum would be impacted by the presence of whispering gallery modes, and exhibits intensity modulation(measured as a function of temperature), but does not exhibit a change in wavelength as a result of this interference. However, when light having a bimodal spectrum is transmitted through an optical fiber, and when both of the spectral modes exhibit intensity modulation, a light spectrum is created which has a resulting mean wavelength which exhibits a temperature-relative periodicity, or wavelength ripple.

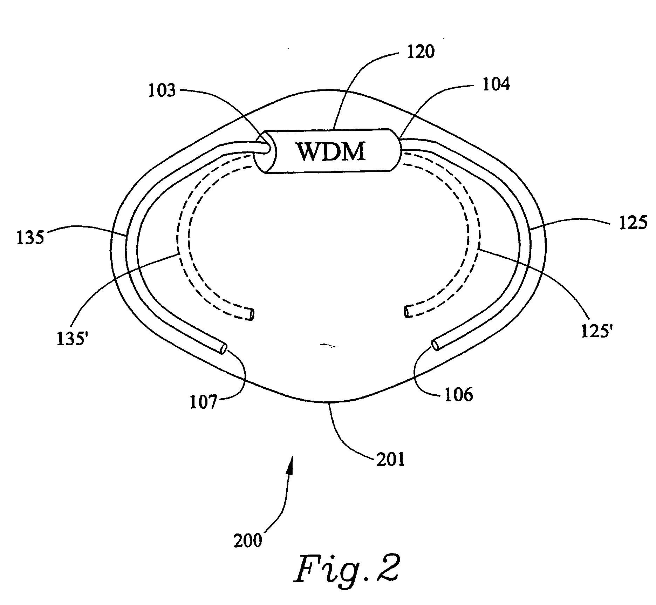

Figure 2 is cut-away view of light source package 200, showing a wavelength division multiplexer 120 with semi-circular optical fiber sections (bends) 125,135 connected at the input 103 and output 104 thereof. Ends 106/107 of optical fiber sections 125/135, respectively, are shown as being unconnected in Figure 2, for the purpose of clarity. In accordance with an exemplary embodiment of the present invention, light source package 200 includes housing 201, wavelength division multiplexer 120 with semi-circular optical fiber sections 125 and 135 (connected to erbium doped fiber 130 and filter 140, respectively), filter 150, and optical isolator 160. In a previously existing light source package, the radius of optical fiber bends (shown as reference nos. 125' and 135' in Figure 2) was constrained, by the dimensions of the housing, to a radius of approximately 1.9 cm (centimeters). In accordance with an exemplary embodiment of the present invention, housing 120 is either increased in size, or alternatively, optical fiber sections 125 and 135 are re-routed through the housing 120 (if permitted by the housing dimensions), so that the minimum radius of optical fiber sections 125 and 135 is approximately 2.5 cm.

In a fiber optic light source having semi-circular optical fiber sections 125'/ 135' with radii of 1.9 cm, wavelength ripple was observed to be greater than 70 ppm (parts per million) over a 130 degree centigrade temperature range. When the radi us of semi-circular optical fiber sections 125' and 135' was increased to 2.54 cm in accordance with the present invention, the wavelength ripple was measured at less than 30 ppm over a 130 degree centigrade temperature range. It is to be noted teat, while an optical fiber bend radius of approximately 2.5 centimeters provides a significant reduction in wavelength ripple as compared to the prior art bend radius of 1.9 cm, any increase in the radium of an existing curved section of optical fiber in a fiber optic gyroscope light source should provide a corresponding decrease in the wavelength ripple caused by that particular section.

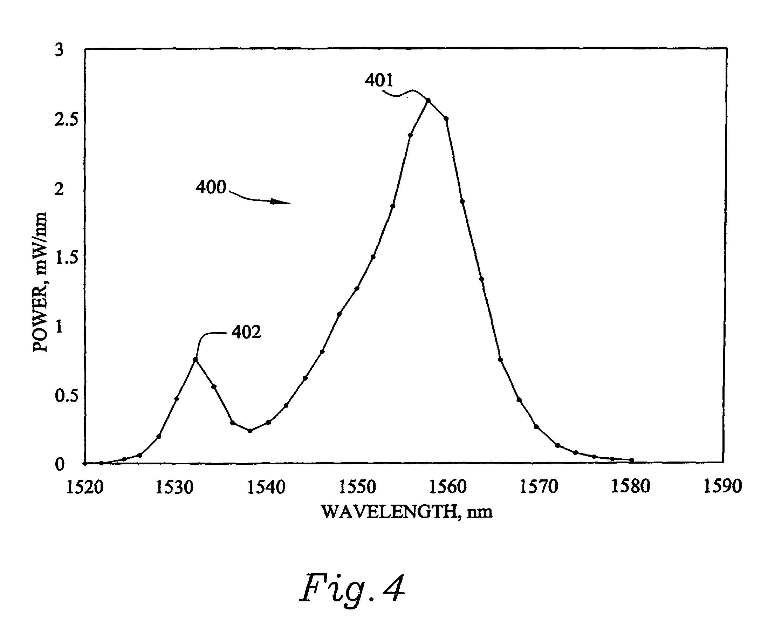

Figure 4 depicts a typical waveform 400 of the light generated by fiber optic light source after having been filtered by 980 nm filterl 10 and spectrum-shifted by erbium doped fiber 130. As shown in Figure 4, waveform 400 has a bimodal spectrum with peaks 402 and 401 located at approximately 1531 nm and 1560 nm, respectively. Attenuation of the 1531 nm spectral component 402 by fiber Bragg band reject filter 130 further reduces the amount of wavelength ripple present in the output 170 of fiber optic light source 100.

## Claims

1. A method for reducing wavelength ripple in a fiber optic light source (100) used in a fiber optic gyroscope, wherein said fiber optic light source includes a wavelength division multiplexer (120) having a first curved section (125) of optical fiber and a second curved section (135) of optical fiber connected thereto, said method comprising the step of:
substantially increasing the radius of each said curved section (125, 135) of optical fiber connected to said wavelength division multiplexer (120) in said fiber optic light source (100).

2. The method of claim 1, wherein said first curved section (125) of optical fiber and said second curved section (135) of optical fiber are substantially semi-circular.

3. The method of claim 2, wherein the radii of said first curved section (125) of optical fiber and said second curved section (135) of optical fiber are each increased from a radius of less than 2 centimeters to a radius of at least 2.5 centimeters.

4. The method of claim 3, wherein the radii of said first curved section (125) of optical fiber and said second curved section (135) of optical fiber are increased by at least 25 percent.

5. The method of claim 2, wherein said first curved section (125) of optical fiber and said second curved section (135) of optical fiber are each connected to different instances of erbium doped fiber (130,140).

6. The method of claim 1, wherein the fiber optic light source (100) has a bimodal output spectrum and includes an erbium doped fiber spectrum-shaping filter (140) and an optical isolator (160), further comprising the step of filtering light emitted from said fiber optic light source by inserting, between said spectrum-shaping niter (140) and said optical isolator (160), a band reject filter (150) having a high attenuation in a frequency range centered on a frequency of a secondary spectral peak in said bimodal spectrum, thereby reducing said wavelength ripple by attenuating light comprising said secondary spectral peak.

7. A fiber optic light source (100) used in a fiber optic gyroscope, wherein said light source (100) comprises a wavelength division multiplexer (120) and two semi-circular optical fiber sections (125, 135) each of which is adapted to being connected to a section of erbium doped fiber (130, 140), and wherein each of said two semi-circular optical fiber sections (125, 135) has a radius of at least 2.5 centimeters.

8. The fiber optic light source (100) of claim 7, wherein a bimodal spectrum having a spurious spectral peak is adapted to be generated, further comprising a fiber Bragg grating band reject filter (150) located between said wavelength division multiplexer (120) and an optical coupler, wherein said band reject filter (150) is arranged so that in use it attenuates said spurious spectral peak, thereby reducing wavelength ripple in the output of said light source (100).

## Patentansprüche

1. Verfahren zum Reduzieren von Wellenlängenbrumm in einer faseroptischen Lichtquelle (100), die in einem faseroptischen Kreisel genutzt wird, wobei die faseroptische Lichtquelle einen Wellenlängenmultiplexer (120) mit einem ersten gekrümmten Abschnitt (125) aus optischer Faser und einem zweiten gekrümmten Abschnitt (135) aus optischer Faser aufweist, die damit verbunden sind, wobei das Verfahren folgenden Schritt umfasst:
im Wesentlichen Vergrößern des Radius jedes der gekrümmten Abschnitte (125, 135) aus optischer Faser, die mit dem Wellenlängenmultiplexer (120) in der faseroptischen Lichtquelle (100) verbunden sind.

2. Verfahren nach Anspruch 1, wobei der erste gekrümmte Abschnitt (125) aus optischer Faser und der zweite gekrümmte Abschnitt (135) aus optischer Faser im Wesentlichen halbkreisförmig ist.

3. Verfahren nach Anspruch 2, wobei die Radien des ersten gekrümmten Abschnitts (125) aus optischer Faser und des zweiten gekrümmten Abschnitts (135) aus optischer Faser jeweils von einem Radius von weniger als 2 Zentimeter auf einen Radius von zumindest 2,5 Zentimeter vergrößert werden.

4. Verfahren nach Anspruch 3, wobei die Radien des ersten gekrümmten Abschnitts (125) aus optischer Faser und des zweiten gekrümmten Abschnitts (135) aus optischer Faser zumindest um 25 Prozent vergrößert werden.

5. Verfahren nach Anspruch 2, wobei der erste gekrümmte Abschnitt (125) aus optischer Faser und der zweite gekrümmte Abschnitt (135) aus optischer Faser jeweils mit verschiedenen Abschnitten von mit Erbium dotierter Faser (130, 140) verbunden werden.

6. Verfahren nach Anspruch 1, wobei die faseroptische Lichtquelle (100) ein bimodales Ausgangsspektrum aufweist und einen spektrumformenden Filter (140) aus mit Erbium dotierter Faser und einen Optoisolator (160) beinhaltet, ferner umfassend den Schritt des Filterns von Licht, das von der faseroptischen Lichtquelle ausgesendet wird, durch Einfügen zwischen dem spektrumformenden Filter (140) und dem Optoisolator (160) eines Bandsperrfilters (150) mit einer hohen Dämpfung in einem Frequenzbereich, der auf eine Frequenz einer sekundären Spektralspitze in dem bimodalen Spektrum zentriert ist, wodurch der Wellenlängenbrumm durch Dämpfungslicht reduziert wird, das die sekundäre Spektralspitze umfasst.

7. Faseroptische Lichtquelle (100), die in einem faseroptischen Kreisel genutzt wird, wobei die Lichtquelle (100) einen Wellenlängenmultiplexer (120) und zwei halbkreisförmige, optische Faserabschnitte (125, 135) umfasst, die jeweils geeignet sind, mit einem Abschnitt von mit Erbium dotierter Faser (130, 140) verbunden zu sein, und wobei jeder der zwei halbkreisförmigen, optischen Faserabschnitte (125, 135) einen Radius von zumindest 2,5 Zentimeter aufweist.

8. Faseroptische Lichtquelle (100) nach Anspruch 7, wobei ein bimodales Spektrum mit einer falschen Spektralspitze geeignet ist, erzeugt zu werden, ferner umfassend einen Faser-Bragg-Gitterbandsperrfilter (150), der sich zwischen dem Wellenlängenmultiplexer (120) und einem Optokoppler befindet, wobei der Bandsperrfilter (150) so angeordnet ist, dass er im Gebrauch die falsche Spektralspitze dämpft, wodurch ein Wellenlängenbrumm im Ausgang der Lichtquelle (100) reduziert wird.

## Revendications

1. Procédé pour réduire une fluctuation de longueur d'onde dans une source de lumière à fibres optiques (100) utilisée dans un gyroscope à fibres optiques, dans laquelle ladite source de lumière à fibres optiques comprend un multiplexeur à répartition en longueur d'onde (120) qui a une première section courbe (125) de fibre optique et une seconde section courbe (135) de fibre optique qui y sont raccordées, ledit procédé comprenant les étapes :
d'augmentation substantielle du rayon de chacune desdites sections courbes (125, 135) de fibre optique raccordées audit multiplexeur à répartition en longueur d'onde (120) dans ladite source de lumière à fibres optiques (100).

2. Procédé selon la revendication 1, dans lequel ladite première section courbe (125) de fibre optique et ladite seconde section courbe (135) de fibre optique sont essentiellement semi-circulaires.

3. Procédé selon la revendication 2, dans lequel les rayons de ladite première section courbe (125) de fibre optique et ladite seconde section courbe (135) de fibre optique sont chacun augmentés d'un rayon de moins de 2 cm à un rayon d'au moins 2,5 cm.

4. Procédé selon la revendication 3, dans lequel les rayons de ladite première section courbe (125) de fibre optique et ladite seconde section courbe (135) de fibre optique sont augmentés d'au moins 25 pour cent.

5. Procédé selon la revendication 2, dans lequel ladite première section courbe (125) de fibre optique et ladite seconde section courbe (135) de fibre optique sont chacune raccordées à différentes occurrences de fibres dopées à l'erbium (130, 140).

6. Procédé selon la revendication 1, dans lequel la source de lumière à fibres optiques (100) a un spectre de sortie bimodal et comprend un filtre de mise en forme de spectre à fibres dopées à l'erbium (140) et un isolateur optique (160), comprenant en outre l'étape de filtrage de la lumière émise par ladite source de lumière à fibres optiques en insérant, entre ledit filtre de mise en forme de spectre (140) et ledit isolateur optique (160), un filtre à réjection de bande (150) présentant une forte atténuation dans une plage de fréquences centrée sur une fréquence d'un pic spectral secondaire dans ledit spectre bimodal, réduisant de ce fait ladite fluctuation de longueur d'onde en atténuant la lumière comprenant ledit pic spectral secondaire.

7. Source de lumière à fibres optiques (100) utilisée dans un gyroscope à fibres optiques, dans laquelle ladite source de lumière (100) comprend un multiplexeur en longueur d'onde (120) et deux sections de fibres optiques semi-circulaires (125, 135), dont chacune est à même d'être raccordée à une section de fibres dopées à l'erbium (130, 140), et dans laquelle chacune desdites deux sections de fibres optiques semi-circulaires (125, 135) a un rayon d'au moins 2,5 cm.

8. Source de lumière à fibres optiques (100) selon la revendication 7, dans laquelle un spectre bimodal présentant un pic spectral parasite est à même d'être généré, comprenant en outre un filtre à réjection de bande à réseau de Bragg en fibres (150) situé entre ledit multiplexeur en longueur d'onde (120) et un coupleur optique, dans lequel ledit filtre à réjection de bande (150) est disposé de façon que, en utilisation, il atténue ledit pic spectral parasite, réduisant de ce fait la fluctuation de longueur d'onde dans la sortie de ladite source de lumière (100).
